# EUROPÄISCHE PATENTSCHRIFT

(11) **EP 2 742 909 B1**
(45) Veröffentlichungstag und Bekanntmachung des Hinweises auf die Patenterteilung: **18.05.2016**
(21) Anmeldenummer: 12197055.2
(22) Anmeldetag: 13.12.2012
(51) Int. Cl.: A61C 13/20, F27B 17/02

(54) **Dentalofen**
Dental oven
Four dentaire

(43) Veröffentlichungstag der Anmeldung: 18.06.2014
(73) Patentinhaber: Ivoclar Vivadent AG, 9494 Schaan (LI)
(72) Erfinder: Jussel, Rudolf, 6805 Feldkirch-Gisingen (AT)
(74) Vertreter: Baronetzky, Klaus

(56) Entgegenhaltungen:
- EP-A1- 2 550 928
- EP-A1- 2 551 621
- DE-A1-102006 032 655

## Beschreibung

Die Erfindung betrifft einen Brenn- oder Pressofen für Dentalrestaurationen, gemäß dem Oberbegriff von Anspruch 1 sowie ein Verfahren nach Anspruch 15.

Solche Dentalöfen für das Brennen und ggf. Verpressen von Dentalrestaurationsteilen sind seit langem bekannt. In derartigen Dentalöfen wird ein Dentalrestaurationsteil oder werden eine Mehrzahl von Dentalrestaurationsteilen einem Brennvorgang oder Pressvorgang unterworfen, und zwar programmgesteuert nach vorgegebenen Temperatur- und ggf. Pressprofilen.

Die Qualität der erzeugten Dentalrestaurationsteile hängt wesentlich davon ab, dass die vorgesehenen und an das vorhandene Dentalrestaurationsmaterial angepassten Parameter während des Brennens und ggf. Verpressens genau eingehalten werden. Hierzu gehören nicht nur das einzuhaltende Temperaturprofil, sondern bspw. auch die bestehenden Druckverhältnisse während des Brennzyklus.

Zu derartigen Dentalrestaurationsteilen gehören aus Kunststoff, aus Metall, aus Komposit, aber insbesondere auch aus Keramik oder aus Kombinationen dieser herzustellenden Dentalrestaurationsteile.

Durch die zu verarbeitenden Materialien, die Größe, aber auch durch die Anzahl und Form der gleichzeitig herzustellenden Dentalrestaurationsteile wird unter anderem die Gesamtwärmekapazität der zu verarbeitenden Dentalrestaurationsteile bestimmt. Damit kann eine Anpassung der Heizleistung erforderlich werden, wozu an diesen Brenn- oder Pressöfen über eine Eingabevorrichtung verschiedene Verarbeitungsprogramme aufgerufen werden können, in weichen optimale Betriebsparameter für die entsprechenden Rahmenbedingungen (Material, Größe etc.) hinterlegt sind. Durch das Aufrufen und Starten des passenden Verarbeitungsprogramms wird ein Brennprozess zur Erreichung einer optimalen Produktqualität angestrebt.

Derartige Dentalöfen umfassen im Wesentlichen eine Ofenbasis, auf der die zu brennenden Dentalrestaurationsteile, ggf. in einer Muffel, aufgenommen werden, einer Ofenhaube, welche neben einer thermischen Isolierung auch meist die Heizvorrichtung (z.B. elektrische Heizwendeln) aufnimmt, und eine Steuereinrichtung mit einer daran angeschlossenen Anzeige- und Eingabevorrichtung. Die Steuervorrichtung umfasst weiterhin eine Speichervorrichtung, in der die Verarbeitungsprogramme hinterlegt sind. Die Eingabevorrichtung kann ihrerseits zum Teil mit der Anzeigevorrichtung in Form einer berührungsempfindlichen Anzeige (Touchscreen) kombiniert sein und darüber hinaus aber in an sich bekannter Weise dezidierte oder über die Anzeige mit veränderbarer Funktion belegte Taster ("Soft Keys") aufweisen.

Ein solcher Dentalofen wird beispielsweise in der DE 197 54 077 B4 beschrieben. Auf einer Anzeigevorrichtung können sowohl Parameter numerisch als auch in verschiedenfarbigen Kurvendarstellungen, die sich mit einander überlagern lassen, angezeigt werden. Eingaben sind über Taster möglich, wodurch ein Brennprogramm, wenn nötig, modifiziert werden kann.

EP 2 550 928 A1 beschreibt einen Dentalofen mit einer Wärmebildkamera, die bei halb geöffneter Ofenhaube die Temperatur der Dentalrestaurationsteile erfasst, wobei durch entsprechende Steuerung der Ofenhaube ein exaktes Durchfahren eines vorgegebenen Temperaturprofils während der Abkühlphase ermöglicht wird.

Darüber hinaus ist es in neuerer Zeit vorgeschlagen geworden, Dentalöfen auch mit einer Kamera, die vorzugsweise auch für den IR-Bereich empfindlich ist, auszustatten, und damit eine Temperaturerfassung der Brennobjekte auch schon während des Einsetzens derselben in den Ofen vornehmen zu können. Das hat u.a. den Vorteil, dass damit eine recht genaue Erfassung der tatsächlichen Temperatur bspw. der Muffel, welche vorher in einem Vorwärmofen vorgewärmt wurde, erreichbar ist. Durch die Berücksichtigung der tatsächlichen Muffeltemperatur kann dann z.B. das gewählte Bearbeitungsprogramm des Dentalofens, beispielsweise ein Pressprogramm, angepasst und somit ein verbessertes Ergebnis erzielt werden.

Eine solche Temperaturerfassung wurde derart vorgeschlagen, dass auf der Basis einer solcherart erfassten absoluten Muffeltemperatur eine Korrektur der Brennparameter wie z.B. der Aufheizdauer erfolgt, um für den eigentlichen, darauf folgenden Bearbeitungsvorgang optimale Verarbeitungsparameter für das zu verarbeitende Material sicherstellen zu können.

Trotz der mitunter recht komplexen Steuerung der Ofenparameter während des Brennvorganges, die neben der eigentlichen Brenntemperatur (bzw. der Brennkurve) die Einbringtemperatur der zu brennenden Dentalrestaurationsteile sowie die Spezifika der zu brenndenden Materialien berücksichtigt, zeigt es sich, dass die Brennergebnisse bzw. die Qualität der dieserart gefertigten Dentalrestaurationen nicht in jedem Fall die Erwartungen erfüllen.

Demgegenüber liegt der Erfindung die Aufgabe zugrunde, einen Dentalofen gemäß dem Oberbegriff von Anspruch 1 sowie ein Verfahren gemäß Anspruch 15 zu schaffen, mit welchem die hohen Qualitätserwartungen wie hohe Maßhaltigkeit und Langlebigkeit der herzustellenden Dentalrestaurationsteile erfüllt werden können.

Diese Aufgabe wird erfindungsgemäß durch Anspruch 1 sowie Anspruch 15 gelöst. Vorteilhafte Weiterbildungen ergeben sich aus den Unteransprüchen. Einige der bekannten Dentalöfen sind mit einer motorisch betätigten Ofenhaube ausgestattet. Diese ermöglicht ein automatisches Schließen der Ofenhaube zum Beginn des Brennprogrammes sowie ein sehr erschütterungsarmes Öffnen am Ende des Brennzyklus.

Prinzipiell genauso geeignet ist eine feststehende Ofenhaube bei einer motorisch absenkbaren Ofenbasis, jedoch weist diese Lösung den Nachteil auf, dass die frisch gebrannten Dentalrestaurationsteile beim Absenken der Ofenbasis unweigerlich Erschütterungen ausgesetzt sind. Das Ausmaß der Erschützerungen hängt von der Konstruktion und der Güte des für den Antrieb der Ofenbasis verwendeten Getriebes ab. In jedem Fall jedoch wirken sich diese Erschütterungen nachteilig auf die Produktqualität des sich noch abkühlenden Dentalrestaurationsteils aus.

Insofern wird an dieser Stelle von einer motorisch öffenbaren Ofenhaube und einer feststehenden Ofenbasis ausgegangen. Das erfindungsgemäße Prinzip lässt sich jedoch ohne weiteres auch auf die vorstehend erwähnte bewegliche Ofenbasis in Verbindung mit einer feststehenden Ofenhaube anwenden.

Im Rahmen der Suche nach Wegen zur Verbesserung der Produktqualität wurde herausgefunden, dass neben den Parametern wie einer optimalen Brenntemperatur und der Brenndauer für die optimale Qualität der herzustellenden Dentalrestaurationsteile weitere Rahmenbedingungen eine wesentliche Rolle spielen. Auch der Verlauf der Abkühlung der fertig gebrannten Dentalrestaurationsteile hat auf die dauerhafte Qualität einen sehr großen Einfluss. Zum Beispiel können durch eine zu schnelle Abkühlung, wie diese durch eine direkte Entnahme des Brennobjektes aus dem Brennofen unmittelbar nach Abschluss des eigentlichen Brennprozesses hervorgerufen werden kann, innere Spannungen in den Brennobjekten entstehen, die zum Verziehen und damit schlechter Maßhaltigkeit oder im Extremfall zu Spannungsrissen führen können.

Solche Spannungsrisse können dabei im ungünstigsten Falle erst lange Zeit nach der Herstellung durch die Benutzung und dabei auftretende punktuelle Belastungen der Dentalrestaurationen auftreten.

Eine zu langsam erfolgende Abkühlung des Dentalrestaurationsteils hat zwar vordergründig keinen negativen Einfluss auf die Produktqualität, verlängert jedoch die Zykluszeit, während der der jeweilige Brennofen nicht für einen neuen Brennzyklus zur Verfügung steht, und ist insofern nicht wünschenswert.

Eine zu schnelle Abkühlung, die beispielsweise durch eine forcierte Kühlung mittels eines im Dentalofen vorgesehenen Ventilator realisierbar ist, kann hingegen die weiter vorn beschriebenen Probleme verursachen, weshalb diese möglichst zu vermeiden ist.

In bestimmten Fällen, in denen der Dentalofen im Inneren mit Unterdruck oder Vakuum oder auch mit einer Schutzatmosphäre betrieben werden soll, verbietet sich zudem die Verwendung eines Ventilators, da Ventilationsöffnungen, selbst wenn diese verschließbar sein sollten, der Ausbildung eines Unterdruckes oder gar Vakuums entgegenstehen.

Die Abkühlung des Brenngutes variiert in Abhängigkeit von dessen Masse, Größe und Form (z.B. durch verschiedene Oberflächenstrukturen). Ist das Verhältnis von Oberflächeninhalt zu Volumen des Brenngutes groß, so resultiert daraus eine höhere Abkühlungsgeschwindigkeit im Vergleich zu einem geringeren Oberflächeninhalt relativ zum Volumen des Brenngutes. Darüber hinaus tragen die verwendeten Brenngutträger, eventuell verwendete Brennstifte und Stützpasten sowie die Ofenhaube und die Ofenbasis jeweils zur Veränderung der Abkühlungsrate bei.

Erfindungsgemäß ist es auch günstig, dass Schwankungen der Umgebungsbedingungen des Ofens ebenfalls erfindungsgemäß kompensiert werden können. So erfasst der erfindungsgemäße Temperatursensor, der als Infrarotkamera ausgebildet sein kann, eine stärkere Abkühlung aufgrund einer kühleren Umgebungstemperatur, und die erfindungsgemäße Steuerung des Antriebs der Ofenhaube ermöglicht es, basierend auf dem Temperaturgradienten eine Anpassung vorzunehmen, bei zu rascher Abkühlung also beispielsweise die Ofenhaube langsamer zu öffnen oder wieder etwas zu schließen.

Auch wenn der erfindungsgemäße Dentalofen mit einer feststehenden Ofenbasis und einer demgegenüber beweglichen Ofenhaube beschrieben ist, versteht es sich, dass alternativ auch die Ofenhaube feststehend und die Ofenbasis absenkbar ausgelegt sein können. Unter Antrieb für die Ofenhaube ist also der Antrieb für die Relativbewegung zwischen Ofenhaube und Ofenbasis zu verstehen, und unter Öffnen der Ofenhaube die Relativbewegung dieser zur Ofenbasis.

Eine individuelle, zügige, aber trotzdem kontrollierte (also keinesfalls zu schnelle) Abkühlung des Brenngutes nach Abschluss des Brennprozesses unter Berücksichtigung der vorstehend genannten Faktoren, welche gleichzeitig die Nachteile der oben erwähnten forcierten Kühlung mittels eines in der Brennhaube befindlichen Ventilators vermeidet, ist also wünschenswert.

Die vorgenannten Nachteile wie die Neigung zu thermisch oder mechanisch verursachten Spannungsrissen oder aber eine zu lange Zykluszeit durch eine übermäßig verzögerte Abkühlung können überraschend einfach durch die erfindungsgemäße Lösung, die im Folgenden näher beschrieben wird, vermieden werden.

Durch eine außerhalb des Brennraumes angeordnete Temperaturerfassungsvorrichtung, welche vorzugsweise durch eine Infrarot- oder IR-Kamera gebildet ist, lässt sich, wie bereits weiter oben erwähnt, die Temperatur des Dentalrestaurationsteils oder des Brenngutträgers wie bspw. einer Muffel, in welcher sich das Brennobjekt befindet, beim Einsetzen in den Dentalofen solange erfassen, wie die Ofenhaube noch nicht vollständig geschlossen ist. Vorteilhafterweise ist diese Temperaturerfassungsvorrichtung so angeordnet, dass sie auch bei nur sehr geringer Öffnung der Ofenhaube noch direkten optischen Kontakt zum Brennobjekt im Innern des Ofens hat.

Für den Zeitraum, der sich vom Einstellen des Brennobjektes in den Brennraum bzw. dem Absetzen desselben auf der Ofenbasis bis zum vollständigen Schließen der Ofenhaube erstreckt (die Ofenhaube also die "Sicht" der IR-Kamera auf das Brennobjekt verdeckt), kann insofern eine kontinuierliche Temperaturerfassung erfolgen. Durch die Erfassung der Temperatur in Abhängigkeit der Zeit lässt sich so ein Temperaturverlauf bzw. ein Temperaturgradient erfassen.

Eine Messung der Brennraumtemperatur bei vollständig geschlossener Ofenhaube ist danach natürlich nur noch mit den im Brennraum befindlichen Temperaturfühler (z.B. einem Thermoelement) möglich.

Durch ein thermisch isolierendes, IR-Strahlung jedoch möglichst nicht bedämpfendes und insofern für IR-Strahlung durchlässiges Fenster, welches sich im optischen Pfad zwischen dem Brennobjekt und der IR-Kamera in der Ofenhaube befindet, könnte sogar eine Messung der Temperatur des Brennobjektes bei geschlossener Ofenhaube erfolgen.

Nach Abschluss des Brennprozesses wird programmgemäß die Heizung des Ofens abgeschaltet und die Abkühlung des Brennobjektes beginnt. Um die Abkühlung zu beschleunigen, ohne jedoch technische Mittel wie einen Ventilator einsetzen zu müssen, ist es überraschend einfach möglich, die Ofenhaube, gesteuert über die Steuerungsvorrichtung des Ofens, mithilfe des Motors zu öffnen und über die außerhalb der Brennkammer angeordnete IR-Kamera wieder die Temperatur des Brennobjektes zu erfassen.

Die kontinuierliche Erfassung der Temperatur des Brennobjektes kann somit in dem Moment beginnen, in dem die Ofenhaube ausreichend weit geöffnet worden ist, um einen optischen Kontakt zwischen IR-Kamera und Brennobjekt zu ermöglichen. Wie weiter oben beschrieben, lässt sich nun der Temperaturgradient erfassen, mit welchem die Abkühlung des Brennobjektes verläuft.

Eine größere Öffnung der Ofenhaube verursacht eine schnellere Abkühlung, da die Abstrahlung der in der Ofenhaube und deren Isolation gespeicherten Restwärme weniger stark auf des damit weiter von der Ofenhaube entfernte Brennobjekt verringert wird und ein besserer Wärmeübergang zwischen der Umgebungsluft und dem Brenngut stattfinden kann. Eine weniger weit geöffnete Ofenhaube hingegen lässt die Abstrahlung der Restwärme von Heizung und Isolierung auf das Brennobjekt dieses noch nachwärmen, außerdem wird durch den durch eine relativ weit geschlossene Ofenhaube ein Temperaturausgleich zwischen der Umgebung und dem Brenngut behindert. Der Akühlkurve fällt in diesem Fall deutlich flacher aus.

Mithilfe der Steuervorrichtung des Dentalofens kann ein kontinuierlicher Vergleich der tatsächlichen Abkühlrate des Brennobjektes mit der in dem Brennprofil des gewählten Verarbeitungsprogrammes vorgegebenen optimalen Abkühlrate vorgenommen werden. Durch die Steuerung des Ofenhaubenmotors durch die Steuervorrichtung des Ofens kann nun überraschend einfach eine Anpassung der Abkühlrate des Brennobjektes dergestalt vorgenommen werden, dass durch eine Verringerung der Öffnung (also ein Absenken) der Ofenhaube diese verringert bzw. durch eine Vergrößerung der Öffnung (also ein Anheben) der Ofenhaube die Abkühlrate erhöht werden kann.

Für verschiedene Temperaturbereiche kann diese optimale Abkühlrate des Brennobjektes durchaus verschieden sein. Durch die programmgesteuerte Öffnung oder Absenkung der Ofenhaube ist es möglich, beispielsweise für den Beginn der Abkühlung eine höhere Abkühlrate zu realisieren, diese dann, beim Durchfahren der so genannten Transformationstemperatur, welche den kritischen Übergang einer Keramik bzw. eines Glases vom weichen in den festen Zustand repräsentiert, deutlich verringert, um anschließend daran wieder eine zügigere, weil unkritischere Abkühlung ablaufen zu lassen.

Bei Erreichen einer im Brennprofil des Verarbeitungsprogrammes ebenfalls festgelegten Endabkühltemperatur wird vom Ofen dann ein Signal ausgegeben, dass das Brenngut nunmehr entnommen werden kann, und die vollständige Öffnung der Ofenhaube, wenn diese bisher noch nicht erfolgt ist, durchgeführt.

Durch die erfindungsgemäße automatische Steuerung der Öffnungsposition der Ofenhaube in Abhängigkeit der tatsächlichen Brennguttemperatur ist es erfindungsgemäß möglich, eine optimale Abkühlung des Brenngutes mit einer kürzestmöglichen Zyklusszeit zu realisieren, ohne die nachteiligen Effekte einer zu schnell vonstatten gehenden Abkühlung wie z.B. thermische Spannungen (Verziehen, Risse) fürchten zu müssen.

Gemäß einer vorteilhaften Ausgestaltung ist es vorgesehen, dass der Temperatursensor die Temperatur der Dentalrestauration fortlaufend erfasst, und dass die Steuervorrichtung aus den fortlaufend erfassten Temperaturwerten des Temperatursensors einen Temperaturgradienten berechnet.

Gemäß einer vorteilhaften Ausgestaltung ist es vorgesehen, dass der Temperatursensor ein optischer Sensor, insbesondere ein Infrarot-Sensor, ist.

Gemäß einer vorteilhaften Ausgestaltung ist es auch vorgesehen, dass der Temperatursensor ein zweidimensionales Sensorarray, insbesondere eine Wärmebildkamera, ist. Gemäß einer vorteilhaften Ausgestaltung ist es auch vorgesehen, dass der Temperatursensor außerhalb der Brennkammer, insbesondere seitlich oberhalb der Ofenbasis, angeordnet ist.

Gemäß einer weiteren vorteilhaften Ausgestaltung ist es vorgesehen, dadurch gekennzeichnet, dass die Ofenhaube ein für IR-Strahlung transparentes Fenster aufweist, welches im optischen Pfad zwischen der in der Brennkammer befindlichen Dentalrestauration und dem Temperatursensor angeordnet ist.

Gemäß einer vorteilhaften Ausgestaltung ist es auch vorgesehen, dadurch gekennzeichnet, dass die Steuervorrichtung geeignet ist, die Abkühlungsrate der Dentalrestauration durch eine Veränderung der Position der Ofenhaube relativ zur Ofenbasis mittels des Antriebes zu steuern.

Gemäß einer vorteilhaften Ausgestaltung ist es vorgesehen, dass mit dem Temperatursensor die Temperatur eines Brenngutträgers erfassbar ist.

Gemäß einer vorteilhaften Ausgestaltung ist es weiter vorgesehen, dass mit dem Temperatursensor auch die Umgebungstemperatur sowie die Abmessungen der Dentalrestauration und/oder einer Muffel, welche die Dentalrestauration aufnimmt, erfasst werden können.

Gemäß einer vorteilhaften Ausgestaltung ist es vorgesehen, dass mittels einer Bedienvorrichtung Verarbeitungsprogramme auswählbar sind, welche Verarbeitungsprogramme in der Steuervorrichtung abspeicherbar sind, und dass in den Verarbeitungsprogrammen Sollwerte für eine Abkühlungsrate der Dentalrestauration vorgegeben sind.

Gemäß einer vorteilhaften Ausgestaltung ist es vorgesehen, dass die Steuervorrichtung geeignet ist, die Ofenhaube abzusenken, wenn die Abkühlungsrate der Dentalrestauration im Vergleich zu dem durch das gewählte Verarbeitungsprogramm vorgegebenen Sollwert zu groß ist, und dass die Steuervorrichtung geeignet ist, die Ofenhaube anzuheben oder zu beschleunigen, wenn die Abkühlungsrate der Dentalrestauration im Vergleich zu dem durch das gewählte Verarbeitungsprogramm vorgegebenen Sollwert zu klein ist.

Gemäß einer vorteilhaften Ausgestaltung ist es vorgesehen, dass in der Ofenhaube eine Heizvorrichtung angeordnet ist, und dass die Steuervorrichtung geeignet ist, die Heizvorrichtung einzuschalten, wenn die Abkühlungsrate der Dentalrestauration im Vergleich zu dem durch das gewählte Verarbeitungsprogramm vorgegebenen Sollwert zu groß ist.

Gemäß einer vorteilhaften Ausgestaltung ist es weiter vorgesehen, dass an dem Dentalofen eine Kühlungsvorrichtung angeordnet ist, und dass die Steuervorrichtung geeignet ist, die Kühlungsvorrichtung einzuschalten, wenn die Abkühlungsrate der Dentalrestauration im Vergleich zu dem durch das gewählte Verarbeitungsprogramm vorgegebenen Sollwert zu klein ist.

Gemäß einer vorteilhaften Ausgestaltung ist es vorgesehen, dass der Dentalofen weiterhin eine an die Steuervorrichtung angeschlossene Signalisierungsvorrichtung aufweist, und dass die Steuervorrichtung mittels der Signalisierungsvorrichtung geeignet ist, die Unterschreitung einer durch das ausgewählte Verarbeitungsprogramm vorgegebenen Abkühltemperatur des Dentalrestaurationsteils zu signalisieren.

Erfindungsgemäß ist es vorgesehen, dass der Temperatursensor auch das Vorhandensein oder Nicht-Vorhandensein der Dentalrestauration und den Zeitpunkt deren Entnahme erfasst und das Erfassungsergebnis der Steuervorrichtung zuleitet, die dies insbesondere abspeichert.

Gemäß einer weiteren vorteilhaften Ausgestaltung ist es vorgesehen, dass der Dentalofen eine Ofenbasis und eine mittels eines Antriebes bewegbare Ofenhaube aufweist und die Ofenhaube eine Brennkammer für die Aufnahme von Dentalrestaurationen aufweist, und der Dentalofen weiterhin einen an eine Steuervorrichtung angeschlossenen Temperatursensor aufweist, welcher außerhalb der Brennkammer angeordnet ist, und dass die Steuervorrichtung die Ofenhaube nach Ablauf eines abgeschlossenen Brennvorganges entsprechend einem in der Steuervorrichtung abgespeicherten vorbestimmten Wert öffnet; der Temperatursensor die Temperatur der Dentalrestauration erfasst; und wenn die von dem Temperatursensor erfasste Temperatur der Dentalrestauration einen in der Steuervorrichtung abgespeicherten Wert unterschreitet, die Steuervorrichtung die Ofenhaube mittels des Antriebs vollständig öffnet und/oder über eine an die Steuervorrichtung angeschlossene Signalisierungsvorrichtung ein Signal an den Benutzer ausgibt. Weitere Vorteile, Einzelheiten und Merkmale eines Ausführungsbeispiels ergeben sich aus den Zeichnungen und der nachstehenden Beschreibung der Erfindung.

Es zeigen:
- Fig. 1: eine schematische Ansicht des erfindungsgemäßen Dentalofens;
- Fig. 2: eine schematische Ansicht der Steuerung der Ofenhaubenposition während der gesteuerten Abkühlung bei dem erfindungsgemäßen Ofen.

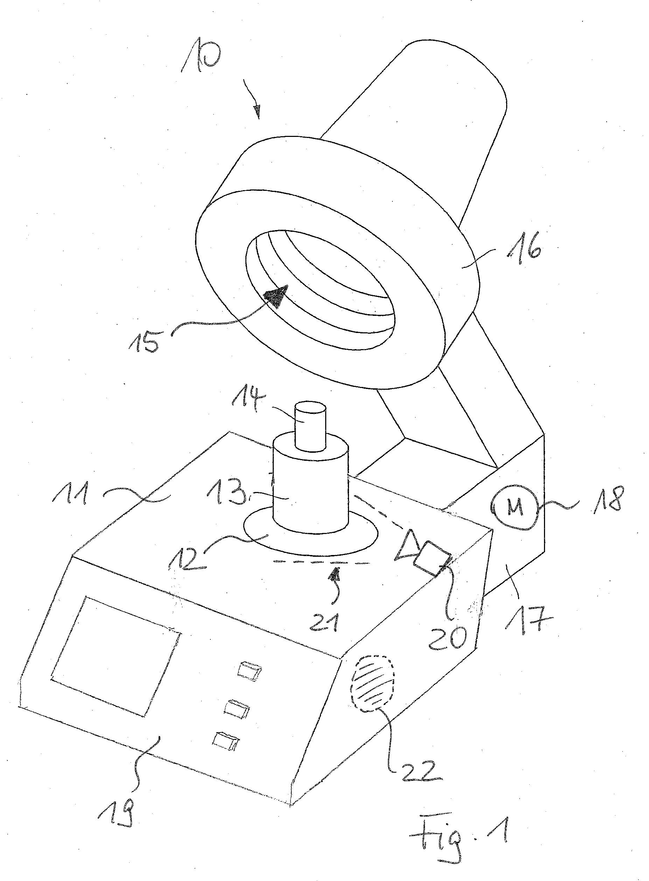

Ein Dentalofen 10 weist eine Ofenbasis 11 mit einem Brennraumboden 12 auf, der dafür bestimmt ist, das Brenngut, beispielsweise eine Muffel 13 (hier mit eingesetztem Rohling 14 dargestellt), aufzunehmen. Für das Brennen wird das Brenngut in einem in Fig. 1 nur schematisch angedeuteten Brennraum 15 aufgenommen, der in der Ofenhaube 16, die mit einem Gelenk 17 mit der Ofenbasis 11 verbunden ist, ausgebildet ist. Das Ausmaß der Öffnung der Ofenhaube 16 ist über den in der Fig. 1 aus Gründen der Übersichtlichkeit nur angedeuteten Motor 18 veränderbar. Wenn es sich bei dem erfindungsgemäßen Dentalofen 10 um einen Pressofen handelt, weist dieser zusätzlich, bevorzugt in der Ofenhaube 16 eine Vorrichtung zum Verpressen des zu verarbeitenden Dentalmaterials auf, auf deren Darstellung hier jedoch aus Gründen der besseren Übersichtlichkeit verzichtet wurde.

Der Dentalofen 10 weist darüber hinaus eine Bedienvorrichtung 19 auf, die mit einer - in der Fig. 1 nicht dargestellten - Steuervorrichtung zusammenwirkt. An die Steuervorrichtung angeschlossen, befindet sich auf der Ofenbasis 11 eine IR-Kamera 20. Die Kamera 20 ist so angeordnet, dass sie sich bei geschlossener Ofenhaube 16 außerhalb dieser befindet und deren Öffnen und Schließen nicht behindert, bei geöffneter Ofenhaube 16 jedoch ein freier Blick auf das Brenngut gewährleistet ist. Der Aufnahmebereich 21 der Kamera 20 erstreckt sich entlang der Ofenbasis 11 und dem Brennraumboden 12 in der Art, dass er die auf dem Brennraumboden 12 abgestellte Muffel 13 mit ihrem gesamten Durchmesser erfasst. Bevorzugt ist die Kamera 20 so angeordnet, dass sie auch bei nur minimal geöffneter Ofenhaube 16 mindestens einen kleinen Teil der eingestellten Muffel 13 erfassen kann und damit eine Temperaturmessung schon bei minimaler Öffnung der Ofenhaube 16 möglich ist.

In dem in Fig. 1 dargestellten Zustand ist die Ofenhaube 16 (einschließlich des Brennraums 15) vollständig angehoben, so dass das Brenngut eingegeben bzw. entnommen werden kann.

In erfindungsgemäß besonders günstiger Weise ist durch die IR-Kamera, welche ja ein zweidimensionales Array von IR-Sensoren darstellt, neben der Erfassung der Temperatur des Brenngutes auch eine Erfassung der Abmessungen des Brenngutes möglich. Hierbei wird der Kontrast zwischen den von der Kamera erfassten heißen Bereichen (Dentalrestauration oder Muffel) und den kühlen Bereichen, welche die Temperatur der Umgebungsluft repräsentieren, ausgenutzt. Zusätzlich ist auf diese Weise die einfache Erfassung der Umgebungstemperatur möglich, deren Wert ebenfalls mit in die Steuerung der Abkühlrate des Brenngutes einfließen kann.

Durch die Erfassung der Abmaße der Dentalrestauration bzw. der Muffel, welche diese aufnimmt, ist auf recht zuverlässige Weise zudem ein Rückschluss auf die Masse und - bei Kenntnis des Materials - damit auf die Wärmekapazität des Brenngutes möglich. Dieser derart ermittelte zusätzliche Parameter kann ebenfalls mit in die Steuerung der Abkühlrate mit einfließen.

Es versteht sich, dass zur Steuerung der Position der Ofenhaube 16 relativ zur Ofenbasis 11 neben der absoluten Position ebenso die Geschwindigkeit der Bewegung, also des Öffnens bzw. Schließens, durch die Steuervorrichtung 30 gesteuert werden kann. Ist die entsprechend den ermittelten Parametern wie aktueller Temperatur des Brennobjektes sowie aktueller Abkühlrate des Brennobjektes von der Steuervorrichtung 30 errechnete Position erreicht, verbleibt die Ofenhaube an dieser Position, bis von der Steuervorrichtung 30 eine einen vorbestimmten Schwellwert überschreitende Abweichung ermittelt wird. Daraufhin wird eine erneute Korrektur, gegenenfalls unter Einhaltung einer ebenfalls vorbestimmten Haltezeit bzw. Pause, welche ein permanentes Nachregeln der Haubenposition vermeiden soll, vorgenommen. Die Steuerungvorrichtung 30 verwendet zur Ermittlung der Regelgröße, d.h. der Öffnung der Ofenhaube 16 relativ zur Ofenbasis 11, allgemein bekannte Algorithmen wie beispielweise eine PID-Regelung oder ähnliches.

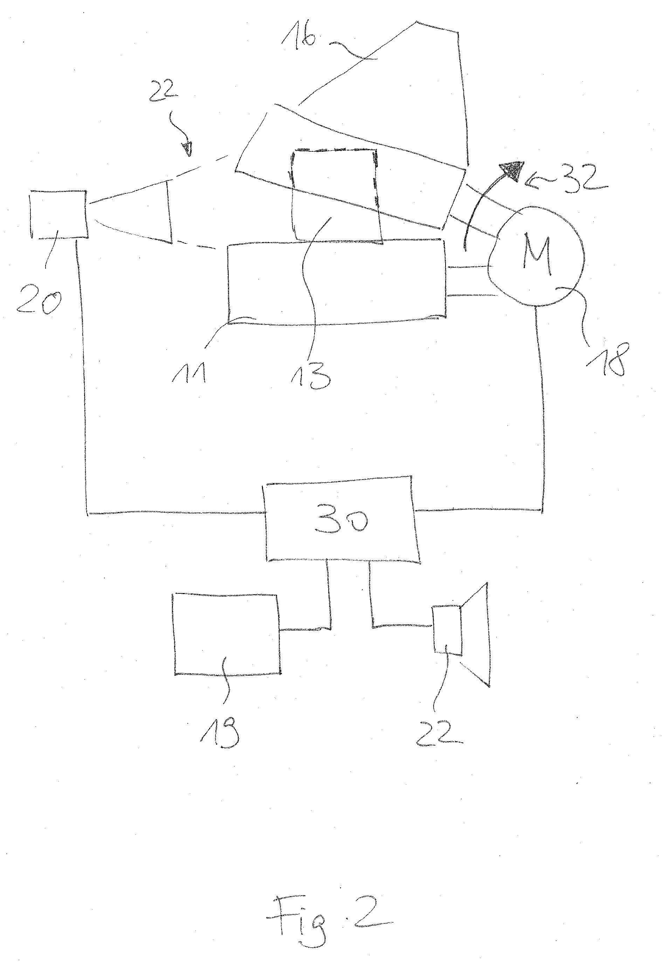

Fig. 2 stellt schematisch die Steuerung der Position der Ofenhaube 16 dar. Über die außerhalb des Brennraumes 15 angeordnete IR-Kamera 20 werden die innerhalb von deren Erfassungsbereich 21 erfassten Temperaturinformationen an die Steuervorrichtung 30 übertragen. Da die so gemessenen Temperaturen des Brenngutes (z.B. der Muffel) kontinuierlich über die Zeit erfasst werden, kann die Steuervorrichtung 30 einen Temperaturgradienten bzw. eine Abkühlrate bestimmen und mit einem im (nicht dargestellten) Speicher der Steuervorrichtung abgelegten Sollwert vergleichen.

Ergibt dieser Vergleich eine zu geringe Abkühlrate, so veranlasst die Steuervorrichtung 30 über den Motor 18 ein weiteres Öffnen der Ofenhaube 16, was durch den Pfeil 32 in Fig. 2 angedeutet ist. Dadurch kann ein verbesserter Temperaturausgleich zwischen der den Dentalofen 10 umgebenden Luft und der Muffel 13 stattfinden, die Abkühlungsrate steigt. Sollte die derart erzielbare Abkühlungsrate trotz vollständig aufgeschwenkter Ofenhaube 16 noch immer nicht ausreichen, kann durch weitere Kühlungsmaßnahmen, z.B. durch einen externen Ventilator, zusätzlich aktiv gekühlt werden.

Im umgekehrten Fall, bei einer zu großen ermittelten Abkühlungsrate, wird der Motor 18 durch die Steuervorrichtung 30 so angesteuert, dass sich die Ofenhaube 16 relativ zur Ofenbasis 11 hin bewegt. Damit wird zum einen die Muffel 13 noch einmal mit der Restwärmestrahlung der in der Ofenhaube 16 befindlichen (nicht dargestellten) Isolierung beaufschlagt, zum anderen wird der Temperaturausgleich zwischen der Umgebungsluft und der Muffel 13 behindert, was eine sinkende Abkühlungsrate zur Folge hat. Sollte die in der Ofenhaube 16 gespeicherte Restwärme nicht ausreichend sein, die Abkühlungsrate auf den durch das Verarbeitungsprogramm vorgegebenen Sollwert zu senken, kann durch die in der Ofenhaube 16 vorhandene und aus Gründen der Übersichtlichkeit ebenfalls nicht dargestellte Brennraumheizung noch zusätzlich Wärmenenergie zugeführt werden.

Diese oben beschriebene Anpassung der Position der Ofenhaube 16 wird fortlaufend vorgenommen, um eine kontinuierliche Steuerung der Abkühlrate der Muffel 16 zu erreichen. Ist eine, ebenfalls durch das Verarbeitunsgprogramm vorgegebene Endtemperatur der Abkühlung der Muffel 16 erreicht, wird durch die Steuervorrichtung 30 mithilfe des Motors 18 die Ofenhaube 16 vollständig geöffnet und zusätzlich ein akustisches Signal über den Lautsprecher 22 oder auch optisch über das Bedienfeld 19 ausgegeben, um den Bediener darüber in Kenntnis zu setzen, dass das Brenngut nun entnommen werden kann und der dentalofen 10 für einen neuen Brennzyklus zur Verfügung steht.

Grundsätzlich ist es auch möglich, eine zu frühe Entnahme des Dentalrestaurationsteils durch einen Temperaturfühler zu erkennen. Dies gilt im besonderen Maße, wenn der Temperaturfühler als Wärembildkamera ausgebildet ist. Bei dieser Ausgestaltung ist es günstig, nach der Art eines Protokolls zu erfassen, bei welcher Temperatur das Dentalrestaurationsteil entnommen wurde, um insofern die exakte Einhaltung der vorgeschriebenen Entnahmetemperatur erfassen zu können.

In einer alternativen Ausführungsform ist es vorgesehen, auf der Basis der bekannten vorangegangenen Temperaturbehandlung (Brenntemperatur, Wärmekapazität des Brenngutes etc.) eine fest vorgegebene Ofenhaubenposition motorisch einzustellen und damit eine, vom Brennprogramm vorgegebene, nicht variable Abkühlungskurve (die dann selbstverständlich nicht linear verläuft) zu realisieren, bei der durch die IR-Kamera lediglich die Unterschreitung einer Temperaturschwelle detektiert wird. Diese Temperaturschwelle ist individuell für die verschiedenen verwendeten Materilien wie bspw. Feldspat oder Lithiumdisilikatkeramik) und die Art des Brandes (Löten, Oxidieren, Glasur etc.).

## Patentansprüche

1. Dentalofen, mit einer Ofenbasis und mit einer Ofenhaube, wobei die Ofenhaube eine Brennkammer für die Aufnahme von Dentalrestaurationen aufweist, mit einem Temperatursensor, der die Temperatur der Dentalrestauration erfasst und welcher an eine Steuervorrichtung angeschlossen ist, die den Dentalofen steuert, der Dentalofen (10) einen Antrieb (18) für die Relativbewegung zwischen Ofenhaube (16) und Ofenbasis (11) aufweist, und die Steuervorrichtung (30) auf der Basis der von dem Temperatursensor (20) erfassten Temperatur den Antrieb (18) steuert und insbesondere die Ofenhaube (16) gegenüber der Ofenbasis (11) öffnet, **dadurch gekennzeichnet, dass** der Temperatursensor (20) so eingerichtet ist, dass er auch das Vorhandensein oder Nicht-Vorhadensein der Dentalrestauration und den Zeitpunkt deren Entnahme erfasst und das Erfassungsergebnis der Steuervorrichtung (30) zuleitet, die dies insbesondere abspeichert.

2. Dentalofen nach Anspruch 1, **dadurch gekennzeichnet, dass** der Temperatursensor (20) die Temperatur der Dentalrestauration fortlaufend erfasst, und dass die Steuervorrichtung (30) aus den fortlaufend erfassten Temperaturwerten des Temperatursensors (20) einen Temperaturgradienten berechnet.

3. Dentalofen nach einem der vorangegangenen Ansprüche, **dadurch gekennzeichnet, dass** der Temperatursensor (20) ein optischer Sensor, insbesondere ein InfrarotSensor, ist.

4. Dentalofen nach Anspruch 3, **dadurch gekennzeichnet, dass** der Temperatursensor (20) ein zweidimensionales Sensorarray, insbesondere eine Wärmebildkamera, ist.

5. Dentalofen nach einem der vorangegangenen Ansprüche, **dadurch gekennzeichnet, dass** der Temperatursensor (20) außerhalb der Brennkammer (15), insbesondere seitlich oberhalb der Ofenbasis (11), angeordnet ist.

6. Dentalofen nach einem der vorangegangenen Ansprüche, **dadurch gekennzeichnet, dass** die Ofenhaube (16) ein für IR-Strahlung transparentes Fenster aufweist, welches im optischen Pfad zwischen der in der Brennkammer (15) befindlichen Dentalrestauration und dem Temperatursensor (20) angeordnet ist.

7. Dentalofen nach einem der vorangegangenen Ansprüche, **dadurch gekennzeichnet, dass** die Steuervorrichtung (30) geeignet ist, die Abkühlungsrate der Dentalrestauration durch eine Veränderung der Position der Ofenhaube (16) relativ zur Ofenbasis (11) mittels des Antriebes (18) zu steuern.

8. Dentalofen nach einem der vorangegangenen Ansprüche, **dadurch gekennzeichnet, dass** mit dem Temperatursensor (20) die Temperatur eines Brenngutträgers erfassbar ist.

9. Dentalofen nach einem der vorangegangenen Ansprüche, **dadurch gekennzeichnet, dass** mit dem Temperatursensor (20) auch die Umgebungstemperatur sowie die Abmessungen der Dentalrestauration und/oder einer Muffel, welche die Dentalrestauration aufnimmt, erfasst werden können.

10. Dentalofen nach einem der vorangegangenen Ansprüche, **dadurch gekennzeichnet, dass** mittels einer Bedienvorrichtung (19) Verarbeitungsprogramme auswählbar sind, welche Verarbeitungsprogramme in der Steuervorrichtung (30) abspeicherbar sind, und dass in den Verarbeitungsprogrammen Sollwerte für eine Abkühlungsrate der Dentalrestauration vorgegeben sind.

11. Dentalofen nach einem der vorangegangenen Ansprüche, **dadurch gekennzeichnet, dass** die Steuervorrichtung (30) geeignet ist, die Ofenhaube (16) abzusenken, wenn die Abkühlungsrate der Dentalrestauration im Vergleich zu einem durch ein gewähltes Verarbeitungsprogramm vorgegebenen Sollwert zu groß ist, und dass die Steuervorrichtung (30) geeignet ist, die Ofenhaube (16) anzuheben oder zu beschleunigen, wenn die Abkühlungsrate der Dentalrestauration im Vergleich zu dem durch das gewählte Verarbeitungsprogramm vorgegebenen Sollwert zu klein ist.

12. Dentalofen nach einem der vorangegangenen Ansprüche, **dadurch gekennzeichnet, dass** in der Ofenhaube (16) eine Heizvorrichtung angeordnet ist, und dass die Steuervorrichtung (30) geeignet ist, die Heizvorrichtung einzuschalten, wenn die Abkühlungsrate der Dentalrestauration im Vergleich zu dem durch das gewählte Verarbeitungsprogramm vorgegebenen Sollwert zu groß ist.

13. Dentalofen nach einem der vorangegangenen Ansprüche, **dadurch gekennzeichnet, dass** an dem Dentalofen (10) eine Kühlungsvorrichtung angeordnet ist, und dass die Steuervorrichtung (30) geeignet ist, die Kühlungsvorrichtung einzuschalten, wenn die Abkühlungsrate der Dentalrestauration im Vergleich zu dem durch das gewählte Verarbeitungsprogramm vorgegebenen Sollwert zu klein ist.

14. Dentalofen nach einem der vorangegangenen Ansprüche, **dadurch gekennzeichnet, dass** der Dentalofen (10) weiterhin eine an die Steuervorrichtung (30) angeschlossene Signalisierungsvorrichtung (22) aufweist, und dass die Steuervorrichtung (30) mittels der Signalisierungsvorrichtung (22) geeignet ist, die Unterschreitung einer durch das ausgewählte Verarbeitungsprogramm vorgegebenen Abkühltemperatur des Dentalrestaurationsteils zu signalisieren.

15. Verfahren zur Steuerung eines Dentalofens, wobei der Dentalofen eine Ofenbasis und eine mittels eines Antriebes bewegbare Ofenhaube aufweist und die Ofenhaube eine Brennkammer für die Aufnahme von Dentalrestaurationen aufweist, und wobei der Dentalofen weiterhin einen an eine Steuervorrichtung angeschlossenen Temperatursensor aufweist, welcher außerhalb der Brennkammer angeordnet ist, **dadurch gekennzeichnet, dass**
die Steuervorrichtung die Ofenhaube (16) nach Ablauf eines abgeschlossenen Brennvorganges entsprechend einem in der Steuervorrichtung (30) abgespeicherten vorbestimmten Wert öffnet;
der Temperatursensor (20) die Temperatur der Dentalrestauration erfasst; und wenn die von dem Temperatursensor (20) erfasste Temperatur der Dentalrestauration einen in der Steuervorrichtung (30) abgespeicherten Wert unterschreitet, die Steuervorrichtung (30) die Ofenhaube (16) mittels des Antriebs (18) vollständig öffnet und/oder über eine an die Steuervorrichtung angeschlossene Signalisierungsvorrichtung (22) ein Signal an den Benutzer ausgibt, wobei der Temperatursensor (20) auch das Vorhandensein oder Nicht-Vorhandensein der Dentalrestauration und den Zeitpunkt deren Entnahme erfasst und das Erfassungsergebnis der Steuervorrichtung zuleitet, die dies insbesondere abspeichert.

## Claims

1. Dental furnace, with a furnace base and with a furnace hood, wherein the furnace hood comprises a firing chamber for the accommodation of dental restorations, with a temperature sensor which records the temperature of the dental restoration and which is connected to a control device which controls the dental furnace, the dental furnace (10) comprises a drive unit (18) for the relative movement between furnace hood (16) and furnace base (11) and the control device (30) controls the drive unit (18) based on the temperature recorded by the temperature sensor (20) and in particular opens the furnace hood (16) relative to the furnace base (11), **characterized in that** the temperature sensor (20) is configured to also record the presence or absence of the dental restoration and the point in time of its removal and to forward the result of the recording to the control device (30) which in particular saves this result.

2. Dental furnace in accordance with Claim 1, **characterized in that** the temperature sensor (20) continuously records the temperature of the dental restoration, and **in that** the control device (30) calculates a temperature gradient from the continuously recorded temperature values of the temperature sensor (20).

3. Dental furnace In accordance with one of the preceding Claims, **characterized in that** the temperature sensor (20) is an optical sensor, in particular an infrared sensor.

4. Dental furnace in accordance with Claim 3, **characterized in that** the temperature sensor (20) is a two-dimensional sensor array, in particular a thermographic camera.

5. Dental furnace in accordance with one of the preceding Claims, **characterized in that** the temperature sensor (20) is positioned outside of the firing chamber (15), in particular laterally above the furnace base (11).

6. Dental furnace in accordance with one of the preceding Claims, **characterized in that** the furnace hood (16) comprises a window transparent for IR radiation which is positioned in the optical path between the dental restoration accommodated inside the firing chamber (15) and the temperature sensor (20).

7. Dental furnace in accordance with one of the preceding Claims, **characterized in that** the control device (30) is suitable for controlling the cooling-down rate of the dental restoration by changing the position of the furnace hood (16) relative to the furnace base (11) by means of the drive unit (18).

8. Dental furnace in accordance with one of the preceding Claims, **characterized in that** the temperature of a firing tray can be recorded with the help of the temperature sensor (20).

9. Dental furnace in accordance with one of the preceding Claims, **characterized in that** the ambient temperature as well as the dimensions of the dental restoration and/or a muffle which accommodates the dental restoration can also be recorded with the help of the temperature sensor (20).

10. Dental furnace in accordance with one of the preceding Claims, **characterized in that** processing programs can be selected by means of an operation device (19), which processing programs can be saved in the control device (30), and **in that** target values for a cooling-down rate of the dental restoration are predetermined in the processing programs.

11. Dental furnace in accordance with one of the preceding Claims, **characterized in that** the control device (30) is suitable for lowering the furnace hood (16) when the cooling-down rate of the dental restoration is too high compared with a target value predetermined by the selected processing program, and **in that** the control device (30) is suitable for elevating or accelerating the furnace hood (16) when the cooling-down rate of the dental restoration is too low compared with the target value predetermined by the selected processing program.

12. Dental furnace in accordance with one of the preceding Claims, **characterized in that** a heating device is provided inside the furnace hood (16), and **in that** the control device (30) is suitable for switching on the heating device when the cooling-down rate of the dental restoration is too high compared with the target value predetermined by the selected processing program.

13. Dental furnace in accordance with one of the preceding Claims, **characterized in that** a cooling device is provided at the dental furnace (10), and **in that** the control device (30) is suitable for switching on the cooling device when the cooling-down rate of the dental restoration is too low compared with the target value predetermined by the selected processing program.

14. Dental furnace in accordance with one of the preceding Claims, **characterized in that** the dental furnace (10) further comprises a signaling device (22) connected to the control device (30), and **in that** the control device (30) is suitable via the signaling device (22) to signal the undercutting of a cooling-down temperature of the dental restoration part predetermined by the selected processing program.

15. Method for controlling a dental furnace, wherein the dental furnace comprises a furnace base and a furnace hood which can be moved with the help of a drive unit, and the furnace hood comprises a firing chamber for the accommodation of dental restorations, and wherein the dental furnace further comprises a temperature sensor which is connected to a control device and which is positioned outside of the firing chamber, **characterized in that**
the control device opens the furnace hood (16) after expiry of a completed firing process corresponding to a predetermined value saved in the control device (30);
the temperature sensor (20) records the temperature of the dental restoration; and when the temperature of the dental restoration recorded by the temperature sensor (20) falls below a value saved in the control device (30), the control device (30) completely opens the furnace hood (16) by means of the drive unit (18) and/or outputs a signal to the user by means of a signaling device (22) connected to the control device, wherein the temperature sensor (20) also records the presence or absence of the dental restoration and the point in time of its removal and forwards the result of the recording to the control device which in particular saves this result.

## Revendications

1. Four dentaire, avec une base de four et une cloche de four, ou la cloche du four, présente une chambre de combustion pour accueillir des restaurations dentaires, avec un capteur de température qui détecte la température de la restauration dentaire et qui est connectée à un dispositif de commande, qui contrôle le four dentaire, le four dentaire (10) dispose d'un entraînement (18) pour le mouvement relatif entre la cloche du four (16) et la base du four (11) et le dispositif de commande (30) commande l'entraînement (18) à base de la température saisie par le capteur de température (20) et en particulier ouvre la cloche du four (16) par rapport à la base du four (11), **caractérisée en ce que** le capteur de température (20) est installé de telle manière, qu'il saisit également la présence ou l'absence de la restauration dentaire et le moment de son enlèvement et transmet le résultat de la détection au dispositif de commande (30), qui le sauvegarde en particulier.

2. Four dentaire selon la revendication 1, **caractérisé en ce que** le capteur de température (20) mesure en continu la température de la restauration dentaire, et que le dispositif de commande (30) calcule un gradient de température à partir des valeurs de température saisies par le capteur de température (20).

3. Four dentaire selon 1 l'une des revendications précédentes, **caractérisé en ce que** le capteur de température (20) est un capteur optique, en particulier un capteur infrarouge.

4. Four dentaire selon la revendication 3, **caractérisé en ce que** le capteur de température (20) est un réseau de capteurs à deux dimensions, en particulier une caméra thermique.

5. Four dentaire selon l'une des revendications précédentes, **caractérisé en ce que** le capteur de température (20) est placé à l'extérieur de la chambre de combustion (15), en particulier latéralement au-dessus de la base du four (11).

6. Four dentaire selon l'une des revendications précédentes, **caractérisé en ce que** la cloche du four (16) dispose d'une fenêtre transparente pour le rayonnement infrarouge, qui est disposé sur le chemin optique entre la restauration dentaire à l'intérieur de la chambre de combustion (15) et le capteur de température (20).

7. Four dentaire selon l'une des revendications précédentes, **caractérisé en ce que** le dispositif de commande (30) est adapté pour contrôler la vitesse de refroidissement de la restauration dentaire en changeant la position de la cloche du four (16) par rapport à la base du four (11) au moyen de l'entraînement (18).

8. Four dentaire selon l'une des revendications précédentes, **caractérisé en ce que** la température de cuisson du support de cuisson est, saisissable avec le capteur de température (20).

9. Four dentaire selon l'une des revendications précédentes, **caractérisé en ce que** la température ambiante ainsi que les dimensions de la restauration dentaire et/ou d'un moufle, qui accueille la restauration dentaire, peuvent être saisies par le capteur de température (20).

10. Four dentaire selon l'une des revendications précédentes, **caractérisé en ce qu'**au moyen d'un dispositif d'opération (19), des programmes de traitement peuvent être sélectionnés, lesquels programmes de traitement pouvant être stockés dans le dispositif de commande (30), et que des valeurs cibles pour un taux de refroidissement de la restauration dentaire sont prédéterminées dans les programmes de traitement.

11. Four dentaire selon l'une des revendications précédentes, **caractérisé en ce que** le dispositif de commande (30) est adapté pour faire baisser la cloche du four (16), si le taux de refroidissement de la restauration dentaire par rapport à une valeur cible qui est spécifiée par un programme de traitement est trop élevé, et que le dispositif de commande (30) est adapté pour soulever la cloche du four (16), ou pour l'accélérer, si le taux de refroidissement de la restauration dentaire par rapport à la valeur cible spécifiée par le programme de traitement sélectionné est trop bas.

12. Four dentaire selon l'une des revendications précédentes, **caractérisé en ce qu'**un dispositif de chauffage est placé dans la cloche du four (16), et que le dispositif de commande (30) est adapté pour allumer le dispositif de chauffage, si le taux de refroidissement de la restauration dentaire par rapport à la valeur cible spécifiée par le programme de traitement sélectionné est trop élevée.

13. Four dentaire selon l'une des revendications précédentes, **caractérisé en ce qu'**un dispositif de refroidissement est installé sur le four dentaire (10), et que le dispositif de commande (30) est adapté pour allumer le dispositif de refroidissement, lorsque le taux de refroidissement de la restauration dentaire par rapport à la valeur cible spécifiée par le programme de traitement sélectionné est trop bas.

14. Four dentaire selon l'une des revendications précédentes, **caractérisé en ce que** le four dentaire (10) présente en outre une signalisation (22) connectée au dispositif de commande (30), et que le dispositif de commande (30) au moyen du dispositif de signalisation (22) est adapté pour signaler le sous-dépassement d'une température de refroidissement de la pièce de restauration dentaire spécifiée par le programme de traitement sélectionné.

15. Procédure pour contrôler un four dentaire, où le four dentaire présente une base de four et une cloche pouvant être déplacée au moyen d'un entraînement et que la cloche du four présente une chambre de combustion pour accueillir des restaurations dentaires, et où le four dentaire présente en outre un capteur de température qui est connectée à un dispositif de commande, qui est installé à l'extérieur de la chambre de combustion, **caractérisé en ce que**
le dispositif de commande ouvre la cloche du four (16) après avoir terminé un processus de cuisson correspondant à une valeur spécifique stocké dans le dispositif contrôle (30).
le capteur de température (20) saisit la température de la restauration dentaire; et si la température de la restauration dentaire mesurée par le capteur de température (20) est inférieure à une valeur sauvegardée dans le dispositif de commande (30), le dispositif de commande (30) ouvre complètement la cloche du four (16) au moyen de l'entraînement(18) et/ou par le biais d'un dispositif de signalisation relié au dispositif de commande (22) produit un signal à l'utilisateur, où le capteur de température (20) saisit également la présence ou l'absence de la restauration dentaire et le moment de son enlèvement et transmet le résultat de la détection au dispositif de commande, qui le sauvegarde en particulier.
